# EUROPEAN PATENT APPLICATION

(11) **EP 2 308 781 A1**
(43) Date of publication of application: **13.04.2011**
(21) Application number: 10186722.4
(22) Date of filing: 06.10.2010
(51) Int. Cl.: B65G 49/06

(54) **Glass sheet feed system**

(30) Priority: 06.10.2009 IT TO20090759
(71) Applicant: Bottero S.p.A., 12100 Cuneo (IT)
(72) Inventor: Balbi, Mario, 12100 Cuneo (IT); Boggero, Enrico, 12100 Cuneo (IT)
(74) Representative: Jorio, Paolo

(57) **Abstract**

A system (1) for feeding glass sheets (2) to a processing line (3) for processing the sheets (2) has a sheet pickup station (4); a number of movable carriages (9) which are moved into the pickup station (4) and each support one or more packs (10) of sheets positioned substantially on edge; a movable loading machine (14) for removing the sheets off the carriages (9) and transferring them to the processing line (3); a store (5) for housing the carriages (9) with respective packs (10) of sheets; and a supply station (6) for restocking the store and which is separate from the pickup station.

## Description

The present invention relates to a glass sheet feed system.

Glass sheets are processed on processing lines, to which the sheets are fed by a dedicated sheet feed system.

Known sheet feed systems comprise a sheet pickup station, where the sheets are arranged substantially on edge in packs on one or more carriages or so-called racks. The sheets are removed one at a time from each carriage by a loading machine which moves, perpendicularly to the sheets, between the pickup station and a release station where the sheets are fed to the input of the processing line. Each carriage moves between the pickup station and a sheet store located outside and alongside the pickup station, and which houses a number of carriages loaded with one or more packs of sheets.

The carriages in the store are loaded at the pickup station with packs of sheets unloaded off rubber-tyred transportation means, normally trucks, located close to the pickup station.

Though widely used, known systems of the above type fail to provide for continuously feeding the processing lines.

That is, to restock the store, the sheets are loaded onto carriages at the pickup station, and the carriages then transferred to the store. This means the loading machine must be stopped and, throughout restocking of the store, is kept in a stationary position to avoid interfering with or endangering the restocking operation.

It is an object of the present invention to provide a glass sheet feed system designed to provide a simple, low-cost solution to the above drawback.

According to the present invention, there is provided a system for feeding glass sheets to a sheet processing line, the system comprising a sheet pickup station; a number of carriages which are moved into said pickup station, and each support at least one pack of sheets positioned substantially on edge; a loading machine which moves, in a first straight direction, between said pickup station, where it removes one sheet at a time from said carriages, and said processing line, where it releases the sheet onto said processing line; a sheet store; and guide means for guiding said carriages, in respective second straight directions perpendicular to said first straight direction, between said pickup station and said store; the system being characterized by also comprising a supply station for restocking said store, and which is separate from said pickup station.

In the system defined above, the store is preferably interposed between the supply station and said pickup station; and the supply station is conveniently located along the second straight directions.

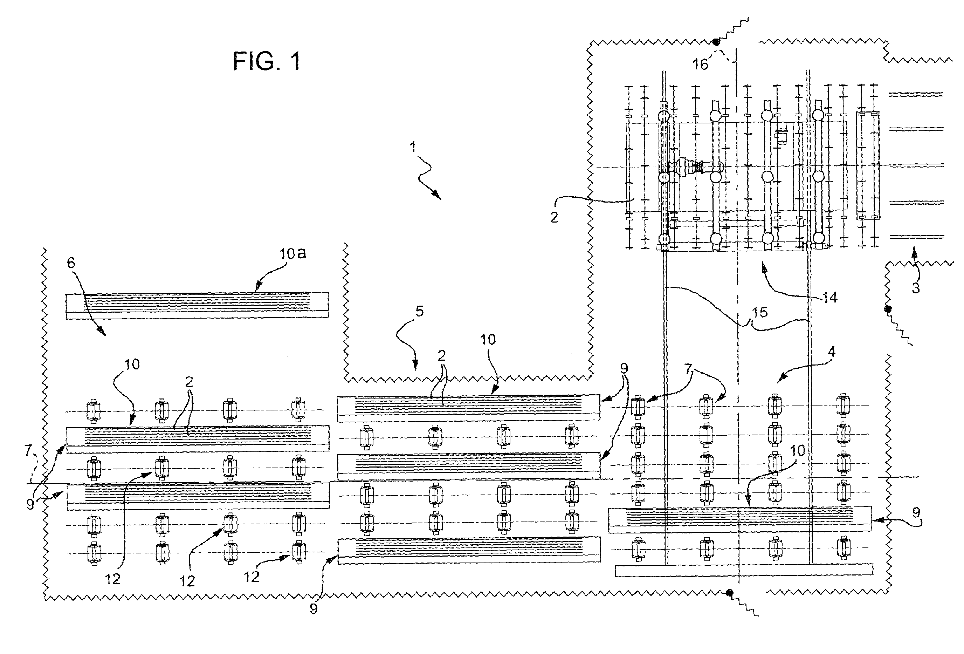

The invention will now be described with reference to the attached drawing showing a preferred embodiment of the glass sheet feed system in accordance with the teachings of the present invention.

Number 1 in the attached drawing indicates as a whole a system for feeding a succession of glass sheets 2 to a known sheet processing line 3 not described in detail.

System 1 comprises, aligned with one another in a direction 7, a pickup station 4 where sheets 2 are picked up; an intermediate sheet store 5; and a supply station 6 for restocking store 5. System 1 also comprises a number of known carriages 9, each of which supports a pack 10 of sheets 2 positioned substantially on edge, and runs, both ways and independently of the other carriages 9, along a respective known straight guide 12 (shown schematically). Guides 12 extend parallel to direction 7, are equally spaced adjacent to one another, and extend through pickup station 4, store 5, and supply station 6 of store 5, which is located between stations 4 and 6, as shown in the drawing.

System 1 also comprises a known loading machine 14, not described in detail, which has a rocking suction-cup board, and is movable, along guides 15 and in a straight direction 16 perpendicular to direction 7, between pickup station 4, where it removes one sheet 2 at a time from one of carriages 9 at pickup station 4, and processing line 3, where it releases sheet 2 onto the input of processing line 3.

In actual use, starting with a full store 5, i.e. in which carriages 9 are all loaded with respective packs 10 of glass sheets 2, one or more of carriages 9 are moved in direction 7 into pickup station 4. At this point, loading machine 14 is activated to move in direction 16, remove sheets 2 successively off carriages 9, and feed them to line 3. When all the sheets 2 on one carriage 9 have been transferred to line 3, carriage 9 is returned to the supply station 6 via store 5. When the number of empty carriages 9 at supply station 6 exceeds a given number, carriages 9 are loaded successively with further packs 10 of sheets, one of which is indicated 10a in the drawing. Packs 10a to restock the store are brought to station 6 on trucks or other transportation systems, and, once loaded, carriages 9 are moved in direction 7 back into store 5 pending transfer to pickup station 4.

Unlike known solutions, system 1 described therefore provides for continuously feeding sheets 2 at any rate to processing line 3, by enabling loading machine 14 to continue operating even while restocking store 5. This is substantially due, unlike known solutions, to pickup of sheets 2 and restocking of the store being carried out independently, by loading the restock packs 10a onto carriages 9 at a separate or different station from pickup station 4.

The location of supply station 6 with respect to pickup station 4 and store 5 reduces the size of system 1, by limiting pickup and transfer space to the actual space required to allow operation of the loading machine.

Clearly, changes may be made to system 1 as described herein. In particular, the stations may be arranged differently with respect to processing line 3, and other movable supporting devices may be substituted for carriages 9.

The machinery and equipment for supplying restock packs 10a may also differ from those described.

## Claims

1. A system for feeding glass sheets to a sheet processing line, the system comprising a sheet pickup station; a number of carriages which are moved into said pickup station, and each support at least one pack of sheets positioned substantially on edge; a loading machine which moves, in a first straight direction, between said pickup station, where it removes one sheet at a time from said carriages, and said processing line, where it releases the sheet onto said processing line; a sheet store; and guide means for guiding said carriages, in respective second straight directions perpendicular to said first straight direction, between said pickup station and said store; the system being **characterized by** also comprising a supply station for restocking said store, and which is separate from said pickup station.

2. A system as claimed in Claim 1, **characterized in that** said store is interposed between said supply station and said pickup station.

3. A system as claimed in Claim 1 or 2, **characterized in that** said supply station is located along said second straight directions.
